# EUROPÄISCHE PATENTSCHRIFT

(11) **EP 1 692 322 B1**
(45) Veröffentlichungstag und Bekanntmachung des Hinweises auf die Patenterteilung: **19.03.2008**
(21) Anmeldenummer: 04801189.4
(22) Anmeldetag: 01.12.2004
(51) Int. Cl.: C22C 38/18, C23C 4/08

(54) **METALLISCHE SCHUTZSCHICHT**
METAL PROTECTIVE COATING
COUCHE DE PROTECTION METALLIQUE

(30) Priorität: 11.12.2003 EP 03028577
(43) Veröffentlichungstag der Anmeldung: 23.08.2006
(73) Patentinhaber: SIEMENS AKTIENGESELLSCHAFT, 80333 München (DE)
(72) Erfinder: SCHMITZ, Friedhelm, 46537 Dinslaken (DE); WIEGHARDT, Kai, 44869 Bochum (DE)
(86) Internationale Anmeldenummer: PCT/EP2004/013661
(87) Internationale Veröffentlichungsnummer: WO 2005/056857

(56) Entgegenhaltungen:
- CH-A5- 646 461
- JP-A- 49 040 239
- US-A- 4 101 713
- US-A- 4 117 179
- US-A- 4 339 509
- US-A- 4 429 019
- US-A- 4 546 052
- US-A- 4 773 928
- US-A- 5 154 885
- US-A- 6 060 174
- US-B1- 6 346 134
- A.S. KHANNA: "Introduction to High Temperature Oxidation and Corrosion" 2002, ASM INTERNATIONAL , USA , XP002321573 Seite 122

## Beschreibung

Die Erfindung betrifft eine metallische Schutzschicht nach Anspruch 1 und ein Schichtsystem nach Anspruch 2.

Metallische Schutzschichten zum Schutz eines Bauteils, insbesondere eines Bauteils, das aus einer Superlegierung auf Eisen-, Nickel- oder Kobaltbasis besteht, gegen Korrosion und Oxidation insbesondere bei hohen Temperaturen, wobei das Bauteil, insbesondere ein Bauteil einer Dampf- oder Gasturbine, bei einer hohen Temperatur mit einem Rauchgas oder dergleichen zu beaufschlagen ist, sind allgemein bekannt.
Die meisten dieser Schutzschichten sind unter dem Sammelnamen MCrAlX bekannt, wobei M für mindestens eines der Elemente aus der Gruppe umfassend Eisen, Kobalt und Nickel steht und weitere wesentliche Bestandteile Chrom, Aluminium und X=Yttrium, wobei letzteres auch ganz oder teilweise durch ein diesem äquivalentes Element aus der Gruppe umfassend Scandium und die Elemente der seltenen Erden ersetzt sein kann.

Typische Beschichtungen dieser Art sind aus den US-Patenten 4,005,989 und 4,034,142 bekannt. Aus dem letztgenannten Patent ist außerdem bekannt, dass ein zusätzlicher Anteil an Silizium die Eigenschaften von Schutzschichten des oben genannten Typs weiter verbessern kann. Eine Schicht, die Al, Cr, Si und B mit rest Anteil Fe enthält, ist aus dem Japanischem Patent JP 49040239 bekannt.

Aus der EP-A 0 194 392 sind weiterhin zahlreiche spezielle Zusammensetzungen für Schutzschichten mit Beimischungen weiterer Elemente für verschiedene Anwendungszwecke bekannt. Dabei ist auch das Element Rhenium mit Beimischungen bis 10% Gewichtsanteil neben vielen anderen wahlweise beifügbaren Elementen erwähnt. Wegen wenig spezifizierter weiterer Bereiche für mögliche Beimischungen ist jedoch keine der angegebenen Schutzschichten für besondere Bedingungen qualifiziert, wie sie beispielsweise an Laufschaufeln und Leitschaufeln von Dampf- oder Gasturbinen mit hohen Eintrittstemperaturen, die über längere Zeiträume betrieben werden müssen, auftreten.

Schutzschichten, die Rhenium enthalten, sind auch aus dem US-Patent 5,154,885, der EP-A 0 412 397, der DE 694 01 260 T2 und der WO 91/02108 A1 bekannt. Die aus diesen Dokumenten insgesamt entnehmbare Offenbarung ist vorliegender Offenbarung in vollem Umfang zuzurechnen.

Ausführungen zum Aufbringen einer Schutzschicht auf ein thermisch hoch zu belastendes Bauteil einer Gasturbine sind der EP 0 253 754 91 zu entnehmen.

Die Bemühung um die Steigerung der Eintrittstemperaturen sowohl bei stationären Dampf- und Gasturbinen als auch bei Flugtriebwerken hat auf dem Fachgebiet der Gasturbinen eine große Bedeutung, da die Eintrittstemperaturen wichtige Bestimmungsgrößen für die mit Gasturbinen erzielbaren thermodynamischen Wirkungsgrade sind. Durch den Einsatz speziell entwickelter Legierungen als Grundwerkstoffe für thermisch hoch zu belastende Bauteile wie Leit- und Laufschaufeln, insbesondere durch den Einsatz einkristalliner Superlegierungen, sind Eintrittstemperaturen von deutlich über 1000° C möglich. Inzwischen erlaubt der Stand der Technik Eintrittstemperaturen von 950° C und mehr bei stationären Gasturbinen sowie 1100° C und mehr in Gasturbinen von Flugtriebwerken.

Beispiele zum Aufbau einer Turbinenschaufel mit einem einkristallinen Substrat, die ihrerseits komplex aufgebaut sein kann, gehen hervor aus der WO 91/01433 A1.

Während die physikalische Belastbarkeit der inzwischen entwickelten Grundwerkstoffe für die hoch belasteten Bauteile im Hinblick auf mögliche weitere Steigerungen der Eintrittstemperaturen weitgehend unproblematisch ist, muss zur Erzielung einer hinreichenden Beständigkeit gegen Oxidation und Korrosion auf Schutzschichten zurückgegriffen werden. Neben der hinreichenden chemischen Beständigkeit einer Schutzschicht unter den Angriffen, die von Rauchgasen bei Temperaturen in der Größenordnung von 1000° C zu erwarten sind, muss eine Schutzschicht auch genügend gute mechanische Eigenschaften, nicht zuletzt im Hinblick auf die mechanische Wechselwirkung zwischen der Schutzschicht und dem Grundwerkstoff, haben. Insbesondere muss die Schutzschicht hinreichend duktil sein, um eventuellen Verformungen des Grundwerkstoffes folgen zu können und nicht zu reißen, da auf diese Weise Angriffspunkte für Oxidation und Korrosion geschaffen würden. Hierbei kommt typischerweise das Problem auf, dass eine Erhöhung der Anteile von Elementen wie Aluminium und Chrom, die die Beständigkeit einer Schutzschicht gegen Oxidation und Korrosion verbessern können, zu einer Verschlechterung der Duktilität der Schutzschicht führt, so dass mit einem mechanischen Versagen, insbesondere der Bildung von Rissen, bei einer in einer Gasturbine üblicherweise auftretenden mechanischen Belastung zu rechnen ist. Beispiele für die Verringerung der Duktilität der Schutzschicht durch die Elemente Chrom und Aluminium sind im Stand der Technik bekannt.

Dementsprechend liegt der Erfindung die Aufgabe zugrunde, eine Schutzschicht und ein Schichtsystem anzugeben, die eine gute Hochtemperaturbeständigkeit in Korrosion und Oxidation aufweist, eine gute Langzeitstabilität aufweisen und die außerdem einer mechanischen Beanspruchung, die insbesondere in einer Dampf- oder Gasturbine bei einer hohen Temperatur zu erwarten ist, besonders gut angepasst sind.

Zur Lösung dieser Aufgabe wird eine Schutzschicht und ein Schichtsystem umfassend diese Schutzschicht zum Schutz eines Bauteils gegen Korrosion und Oxidation bei einer hohen Temperatur angegeben, welche im Wesentlichen aus folgenden Elementen zusammengesetzt ist (Angabe der Anteile in Gewichtsprozent) :
12,5 bis 14,0 wt% Chrom,
0,5 bis 1,0 wt% Silizium,
0,1 bis 0,5 wt% Aluminium,
0,0 bis 0,7 wt% Yttrium und/oder zumindest ein Metall aus der Gruppe umfassend Scandium und die Elemente der Seltenen Erden,
Rest Eisen sowie herstellungsbedingte Verunreinigungen.

In den Figuren ist die Erfindung näher erläutert.

Es zeigen
- Figur 1, 2: beispielhafte Anordnungen der Schutzschicht,
- Figur 3: eine Gasturbine,
- Figur 4: eine Brennkammer und
- Figur 5: eine Dampfturbine.

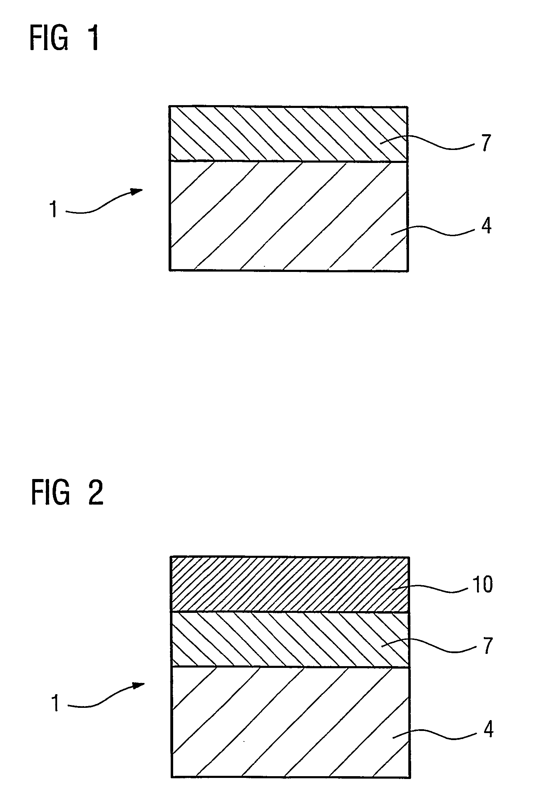

Figur 1 zeigt eine beispielhafte Anordnung einer metallischen Schutzschicht 7 eines Schichtsystems 1.
Die metallische Schutzschicht 7 ist auf einem Substrat 4 angeordnet und bildet in diesem Fall die äußere Schicht des Schichtsystems 1.

In Figur 2 stellt die metallische Schutzschicht 7 eine Zwischenschicht im Schichtsystem 1 dar.
Die metallische Schutzschicht 7 ist ebenfalls auf einem Substrat 4 angeordnet, jedoch ist auf der metallischen Schutzschicht 7 eine weitere, beispielsweise eine keramische Schicht 10 vorhanden.
Die beschriebene Schutzschicht 7 wirkt beispielsweise auch als Haftvermittlerschicht für die Schicht 10 auf dem Substrat 4.
Andere oder weitere metallische und/oder keramische Schichten können vorhanden sein.

Auf diese Schicht 7 kann insbesondere eine Aluminiumoxidschicht aufgebracht oder erzeugt werden.

Die keramische Schicht 10 ist insbesondere eine Wärmedämmschicht auf Zirkonoxidbasis. Dies kann teilweise- oder vollständig stabilisiertes Zirkonoxid sein. Weitere keramische Materialien für die keramische Wärmedämmschicht 10 sind denkbar.

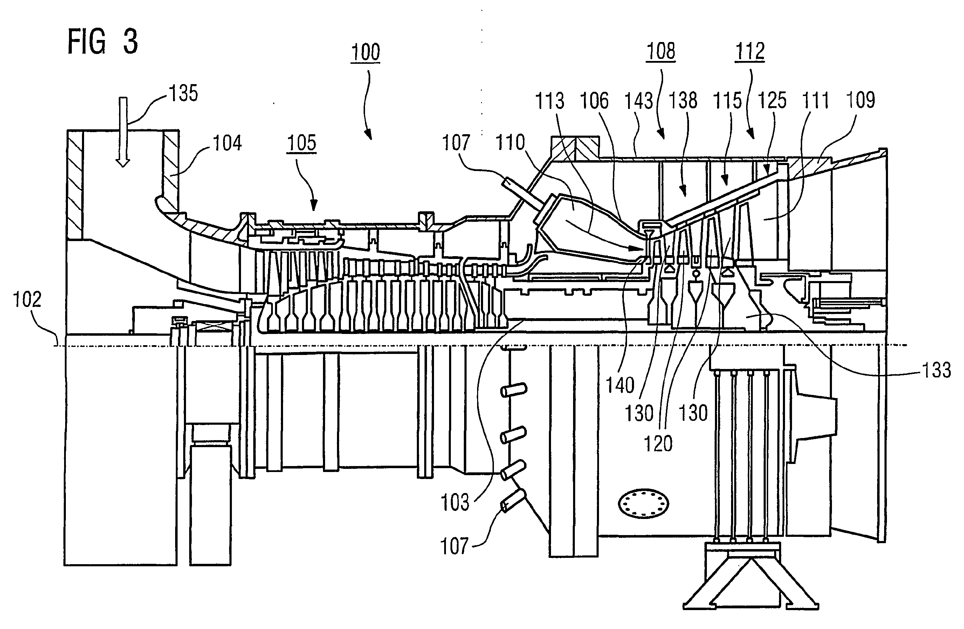

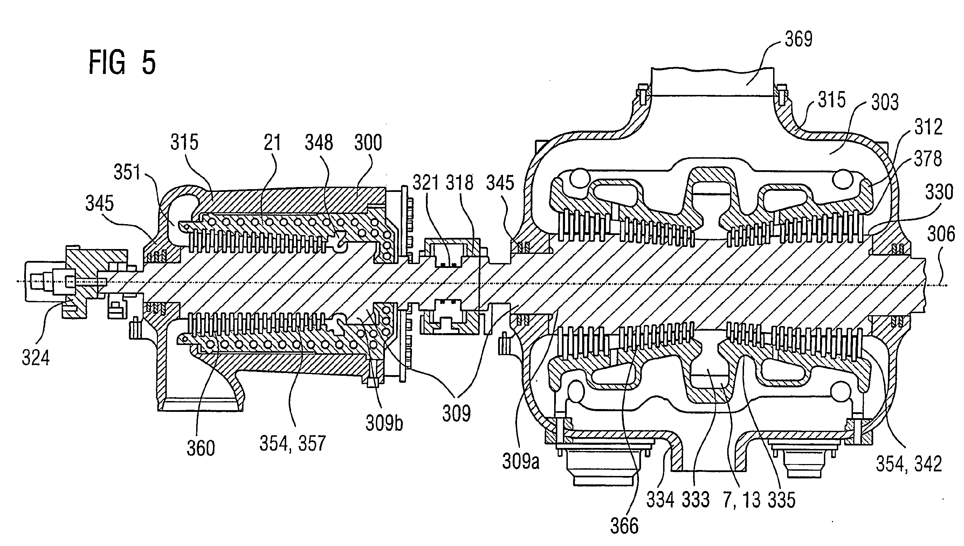

Ebenso sind alle Beschichtungsverfahren denkbar, um die metallische Schutzschicht 7 und/oder die keramische Schicht 10 auf das Substrat 4 bzw. auf die metallische Schutzschicht 7 aufzubringen.
Solche Schichtsysteme 1 können, wie oben schon erläutert, für Bauteile in einer Gasturbine 100 (Fig. 3) sowie in einer Dampfturbine 300, 303 (Fig.5) oder Flugzeugturbine verwendet werden.

Die Schichtsysteme 1 können bei neu hergestellten Bauteilen oder auch bei wieder aufgearbeiteten Bauteilen verwendet werden.
Stark beanspruchte Bauteile, insbesondere Turbinenschaufeln 354, 357, 366 (Fig. 5) 120, 130 (Fig. 3) werden in vielen Fällen, nach dem Einsatz wieder aufgearbeitet, indem die äußeren Schichten 7, 10 sowie weitere Korrosions- oder Oxidationsschichten entfernt werden. Ebenso wird das Bauteil (Substrat 4) dabei überprüft auf Risse, die gegebenenfalls repariert werden.
Danach kann das Bauteil (Substrat 4) wieder mit einer metallischen Schutzschicht 7 versehen werden, um ein Schichtsystem 1 zu bilden.

Die Schutzschicht 7 weist bei guter Korrosionsbeständigkeit eine besonders gute Beständigkeit gegen Oxidation auf und zeichnet sich auch durch besonders gute Duktilitätseigenschaften aus, so dass sie besonders qualifiziert ist für die Anwendung in einer Dampfturbine insbesondere bei einer weiteren Steigerung der Eintrittstemperatur.

Die Zusammensetzung der Schutzschicht 7 auf Eisenbasis zeigt besonders gute Eigenschaften, insbesondere kann die Schutzschicht 7 sehr gut auf ferritischen Substraten 4 aufgebracht werden.
Dabei können die thermischen Ausdehnungskoeffizienten α von Substrat 4 und Schutzschicht 7 sehr gut angeglichen werden, d.h. bis zu 10% Unterschied sind möglich, oder gleich sein, so dass es zu keinem thermisch verursachten Spannungsaufbau zwischen Substrat 4 und Schutzschicht 7 kommt (thermal mismatch), der ein Abplatzen der Schutzschicht 7 verursachen könnte.
Gleiche thermische Ausdehnungskoeffizient bedeutet, dass die Unterschiede höchstens so groß sind, dass es bei den Einsatztemperaturen zu keinen thermisch induzierten Spannungen kommt.
Dies ist besonders wichtig, da bei ferritischen Werkstoffen des Substrats 4 oft keine Wärmebehandlung zur Diffusionsanbindung der Schicht 7 an das Substrat 4 durchgeführt wird, da das ferritische Substrat 4 abschließend vergütet ist und keiner weiteren Wärmebehandlung in der Nähe oder oberhalb der Temperatur der letzten Wärmebehandlung (Anlassbehandlung) ausgesetzt werden sollte.
Die Schutzschicht 7 eignet sich besonders zum Schutz eines ferritischen Bauteils gegen Korrosion und Oxidation bei Temperaturen bis 800°C, insbesondere bis 650°C.

Die Schutzschicht 7 haftet größtenteils oder ausschließlich durch Adhäsion auf dem Substrat 4.

Die Dicke der Schutzschicht 7 auf dem Bauteil 1 wird vorzugsweise auf einen Wert zwischen etwa 100 µm und 300 µm bemessen.

Die Schutzschicht 7 eignet sich auch besonders zum Schutz eines Bauteils gegen Korrosion und Oxidation, während das Bauteil bei einer Materialtemperatur um etwa 950° C, bei Flugturbinen auch um etwa 1100° C, mit einem Rauchgas beaufschlagt wird.

Die Schutzschicht 7 gemäß der Erfindung ist damit besonders qualifiziert zum Schutz eines Bauteils einer Dampf- 300, 303 (Fig. 5) oder Gasturbine 100 (Fig. 3), insbesondere einer Leitschaufel 130, Laufschaufel 120 oder anderen Komponente (Gehäuseteile), die mit heißem Dampf oder Gas vor oder im Turbinenteil der Dampf- oder Gas-Turbine beaufschlagt wird.

Das Substrat 4 kann metallisch oder keramisch sein.

Insbesondere ist das Substrat 4 eine ferritische Basislegierung bei einer Dampfturbine, eine Nickel- oder kobaltbasierte Superlegierung bei einer Gasturbine oder ein Stahl, insbesondere ein 1%CrMoV Stahl oder ein 10% bis 12% Chromstahl.

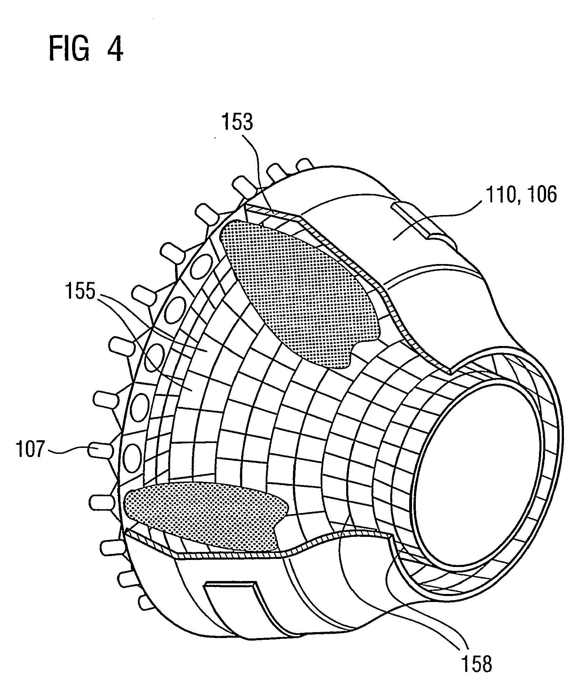

Weitere vorteilhafte ferritische Substrate 4 des Schichtsystems 1 können bestehen aus:
1% bis 2%Cr-Stahl für Wellen (309, Fig. 4):
   wie z.B. 30CrMoNiV5-11 oder 23CrMoNiWV8-8,
1% bis 2%Cr-Stahl für Gehäuse (bspw. 333, Fig. 4):
   G17CrMoV5-10 oder G17CrMo9-10
10% Cr-Stahl für Wellen(309, Fig. 4):
   X12CrMoWVNbN10-1-1
10% Cr-Stahl für Gehäuse (bspw. 333, Fig. 4):
   GX12CrMoWVNbN10-1-1 oder GX12CrMoVNbN9-1.

Als Substrat 4 kommt weiterhin folgende Zusammensetzung in Frage (Angaben in Gewichtsprozent):

| | | | |
|---|---|---|---|
| 0,03 | bis | 0,05% | Kohlenstoff |
| 18 | bis | 19% | Chrom |
| 12 | bis | 15% | Kobalt |
| 3 | bis | 6% | Molybdän |
| 1 | bis | 1,5% | Wolfram |
| 2 | bis | 2,5% | Aluminium |
| 3 | bis | 5% | Titan |

wahlweise geringe Anteile von Tantal, Niob, Bor und/oder Zirkon, Rest Nickel

Solche Werkstoffe sind als Schmiedelegierungen unter den Bezeichnungen Udimet 520 und Udimet 720 bekannt.

Alternativ kommt für das Substrat 4 des Bauteils 1 folgende Zusammensetzung in Frage (Angaben in Gewichtsprozent):

| | | | |
|---|---|---|---|
| 0,1 | bis | 0,15 % | Kohlenstoff |
| 18 | bis | 22 % | Chrom |
| 18 | bis | 19 % | Kobalt |
| 0 | bis | 2 % | Wolfram |
| 0 | bis | 4 % | Molybdän |
| 0 | bis | 1,5 % | Tantal |
| 0 | bis | 1 % | Niob |
| 1 | bis | 3 % | Aluminium |
| 2 | bis | 4 % | Titan |
| 0 | bis | 0,75 % | Hafnium |

wahlweise geringe Anteile von Bor und/oder Zirkon, Rest Nickel.

Zusammensetzungen dieser Art sind als Gusslegierungen unter den Bezeichnungen GTD222, IN939, IN6203 und Udimet 500 bekannt.

Eine weitere Alternative für das Substrat 4 des Bauteils 1 ist folgende Zusammensetzung (Angaben in Gewichtsprozent):

| | | | |
|---|---|---|---|
| 0,07 | bis | 0,1% | Kohlenstoff |
| 12 | bis | 16% | Chrom |
| 8 | bis | 10% | Kobalt |
| 1,5 | bis | 2% | Molybdän |
| 2,5 | bis | 4% | Wolfram |
| 1,5 | bis | 5% | Tantal |
| 0 | bis | 1% | Niob |
| 3 | bis | 4% | Aluminium |
| 3,5 | bis | 5% | Titan |
| 0 | bis | 0,1% | Zirkon |
| 0 | bis | 1% | Hafnium |

wahlweise ein geringer Anteil von Bor, Rest Nickel.

Zusammensetzungen dieser Art sind als Gusslegierungen PWA1483SX, IN738LC, GTD111, IN792CC und IN792DS bekannt; als besonders bevorzugt wird der Werkstoff IN738LC angesehen.

Als weitere Alternative für das Substrat 4 des Bauteils 1 wird folgende Zusammensetzung angesehen (Angaben in Gewichtsprozent):

| | | | |
|---|---|---|---|
| etwa | 0,25% | | Kohlenstoff |
| 24 | bis | 30% | Chrom |
| 10 | bis | 11% | Nickel |
| 7 | bis | 8% | Wolfram |
| 0 | bis | 4% | Tantal |
| 0 | bis | 0,3% | Aluminium |
| 0 | bis | 0,3% | Titan |
| 0 | bis | 0,6% | Zirkon |

wahlweise ein geringer Anteil von Bor, Rest Kobalt.
Solche Zusammensetzungen sind bekannt als Gusslegierungen unter den Bezeichnungen FSX414, X45, ECY768 und MAR-M-509.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109. Die Ringbrennkammer 106 kommuniziert mit einem beispielsweise ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Um den dort herrschenden Temperaturen standzuhalten, werden diese mittels eines Kühlmittels gekühlt. Ebenso können die Schaufeln 120, 130 oben beschriebene Schutzschichten 7 gegen Korrosion (MCrAlX; M = Fe, Co, Ni, X=Y, Seltenen Erden) und Wärme (Wärmedämmschicht, beispielsweise ZrO₂, Y₂O₄-ZrO₂) aufweisen.

Die Leitschaufel 130 weist einen dem Innengehäuse 138 der Turbine 108 zugewandten Leitschaufelfuß (hier nicht dargestellt) und einen dem Leitschaufelfuß gegenüberliegendem Leitschaufelkopf auf. Der Leitschaufelkopf ist dem Rotor 103 zugewandt und an einem Befestigungsring 140 des Stators 143 festgelegt.

Die Figur 4 zeigt eine Brennkammer 110 einer Gasturbine 100. Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Die Materialien der Brennkammerwand und deren Beschichtungen können ähnlich der Turbinenschaufeln sein.

In Figur 5 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließende Außengehäuse 315 auf. Die Hochdruck-Teilturbine 300 ist beispielsweise in Topfbauart ausgeführt. Die Mitteldruck-Teilturbine 303 ist zweiflutig ausgeführt. Es ist ebenfalls möglich, dass die Mitteldruck-Teilturbine 303 einflutig ausgeführt ist. Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 354, 357 auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung 363, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

Die Turbinenwelle 309 ist aus zwei Teilturbinenwellen 309a und 309b zusammengesetzt, die im Bereich des Lagers 318 fest miteinander verbunden sind.

Die Schaufeln 354, 357, 366, Wellen 309, oder andere Gehäuseteile 333 können oben beschriebene Schutzschichten 7, 10 gegen Korrosion (MCrAlX; M = Fe, X=Y, Si, Seltenen Erden) und Wärme (Wärmedämmschicht, beispielsweise ZrO₂, Y₂O₄-ZrO₂) aufweisen.

## Patentansprüche

1. Metallische Schutzschicht,
bestehend aus (in Gewichtsprozent wt%)
12,5 bis 14,0 % Chrom,
0,5 bis 1,0 % Silizium,
0,1 bis 0,5 % Aluminium,
0,0 bis 0,7 wt% Yttrium und/oder zumindest ein Metall aus der Gruppe umfassend Scandium und die Elemente der Seltenen Erden aufweist,
Rest Eisen sowie herstellungsbedingte Verunreinigungen.

2. Schichtsystem,
zumindest bestehend aus einem Substrat (4)
und einer metallischen Schutzschicht (7) nach Anspruch 1 auf dem Substrat (4).

3. Schichtsystem nach Anspruch 2,
**dadurch gekennzeichnet, dass**
das Substrat (4) metallisch oder keramisch ist.

4. Schichtsystem nach Anspruch 2 oder 3,
**dadurch gekennzeichnet, dass**
das Substrat (4) eine ferritische Basislegierung, ein Stahl oder eine nickel- oder kobaltbasierte Superlegierung ist.

5. Schichtsystem nach Anspruch 2 bis 4,
**dadurch gekennzeichnet, dass**
die metallische Schutzschicht (7) ferritisch ist.

6. Schichtsystem nach Anspruch 2, 4 oder 5,
**dadurch gekennzeichnet, dass**
die metallische Schutzschicht (7) und das Substrat (4) ferritisch sind.

7. Schichtsystem nach Anspruch 2 oder 6,
**dadurch gekennzeichnet, dass**
die Schutzschicht (7) durch Adhäsion auf dem Substrat (4) haftet.

8. Schichtsystem nach Anspruch 2, 6 oder 7,
**dadurch gekennzeichnet, dass**
das Schichtsystem (1) keine Diffusionsbehandlung erfahren hat.

9. Schichtsystem nach Anspruch 6, 7 oder 8,
**dadurch gekennzeichnet, dass**
die thermischen Ausdehnungskoeffizienten α der Schutzschicht (7),
insbesondere der ferritischen Schutzschicht (7),
und des Substrats (4),
insbesondere des ferritischen Substrats (4),
gleich, nahezu gleich sind oder bis 10% Unterschied in den Ausdehnungskoeffizienten α aufweisen.

10. Schichtsystem nach Anspruch 2 bis 9,
**dadurch gekennzeichnet, dass**
das Substrat (4) eine eisenbasierte Legierung, insbesondere ein 1%CrMoV Stahl oder ein 10 bis 12prozentiger Chromstahl,
ist.

11. Schichtsystem nach Anspruch 2 bis 9,
**dadurch gekennzeichnet, dass**
das Substrat (4)
ein 1% bis 2%Cr-Stahl,
insbesondere 30CrMoNiV5-11 oder 23CrMoNiWV8-8 oder G17CrMoV5-10 oder G17CrMo9-10, oder
ein 10% Cr-Stahl ist,
insbesondere X12CrMoWVNbN10-1-1 oder GX12CrMoWVNbN10-1-1 oder GX12CrMoVNbN9-1.

12. Schichtsystem nach Anspruch 2,
**dadurch gekennzeichnet, dass**
auf der metallischen Schutzschicht (7) eine keramische Schicht (10) vorhanden ist.

13. Schutzsystem nach Anspruch 12,
**dadurch gekennzeichnet, dass**
die keramische Schicht (10) eine Wärmedämmschicht ist, insbesondere auf Zirkonoxidbasis.

14. Schichtsystem nach Anspruch 2 oder 13,
**dadurch gekennzeichnet, dass**
das Schichtsystem (1) ein Schichtsystem (1) eines Bauteils (110, 120, 130) einer Gasturbine (100) oder ein Bauteil (333, 354, 357, 366) einer Dampfturbine (300, 303) ist.

15. Schichtsystem nach Anspruch 2 oder 14,
**dadurch gekennzeichnet, dass**
dass das Schichtsystem (1) eine Turbinenschaufel (120, 130, 354, 357, 366) oder
dass das Schichtsystem (1) ein Gehäuseteil oder ein Bereich eines Gehäuses einer Turbine (100, 300, 303) oder dass das Schichtsystem (1) eine Auskleidung (155) einer Brennkammer (110) ist.

16. Schichtsystem nach Anspruch 2, 14 bis 18,
**dadurch gekennzeichnet, dass**
das Schichtsystem (1) auf einem neu hergestellten Bauteil, insbesondere für eine Turbinenschaufel (120, 130, 354, 357, 366), angeordnet ist.

17. Schichtsystem nach Anspruch 2, 14 bis 18,
**dadurch gekennzeichnet, dass**
das Schichtsystem (1) auf einem wieder aufgearbeiteten Bauteil, insbesondere für eine Turbinenschaufel (120, 130, 354, 357, 366), vorhanden ist.

## Claims

1. Metallic protective layer,
consisting of (in percent by weight wt%)
12.5 to 14.0% chromium,
0.5 to 1.0% silicon,
0.1 to 0.5% aluminum,
0.0 to 0.7 wt% yttrium and/or at least one metal selected from the group consisting of scandium and the rare earth elements,
remainder iron and production-related impurities.

2. Layer system,
at least comprising a substrate (4)
and a metallic protective layer (7) according to claim 1 on the substrate (4).

3. Layer system according to claim 2,
**characterized in that**
the substrate (4) is metallic or ceramic.

4. Layer system according to claim 2 or 3,
**characterized in that**
the substrate (4) is a ferritic base alloy, a steel or a nickel-base or cobalt-base superalloy.

5. Layer system according to claims 2 to 4,
**characterized in that**
the metallic protective layer (7) is ferritic.

6. Layer system according to claim 2, 4 or 5,
**characterized in that**
the metallic protective layer (7) and the substrate (4) are ferritic.

7. Layer system according to claim 2 or 6,
**characterized in that**
the protective layer (7) bonds to the substrate (4) by adhesion.

8. Layer system according to claim 2, 6 or 7,
**characterized in that**
the layer system (1) has not undergone any diffusion treatment.

9. Layer system according to claim 6, 7 or 8,
**characterized in that**
the coefficients of thermal expansion α of the protective layer (7),
in particular of the ferritic protective layer (7),
and of the substrate (4),
in particular of the ferritic substrate (4),
are equal, virtually equal or have a difference of up to 10% in the expansion coefficients α.

10. Layer system according to claims 2 to 9,
**characterized in that**
the substrate (4) is an iron-base alloy,
in particular a 1% CrMoV steel or a 10 to 12% chromium steel.

11. Layer system according to claims 2 to 9,
**characterized in that**
the substrate (4) is
a 1% to 2% Cr steel,
in particular 30CrMoNiV5-11 or 23CrMoNiWV8-8 or G17CrMoV5-10 or G17CrMo9-10, or
a 10% Cr steel,
in particular X12CrMoWVNbN10-1-1 or GX12CrMoWVNbN10-1-1 or GX12CrMoVNbN9-1.

12. Layer system according to claim 2,
**characterized in that**
a ceramic layer (10) is present on the metallic protective layer (7).

13. Layer system according to claim 12,
**characterized in that**
the ceramic layer (10) is a thermal barrier coating,
in particular based on zirconium oxide.

14. Layer system according to claim 2 or 13,
**characterized in that**
the layer system (1) is a layer system (1) of a component (110, 120, 130) of a gas turbine (100) or is a component (333, 354, 357, 366) of a steam turbine (300, 303).

15. Layer system according to claim 2 or 14,
**characterized**
**in that** the layer system (1) is a turbine blade or vane (120, 130, 354, 357, 366) or
**in that** the layer system (1) is a housing part or a region of a housing of a turbine (100, 300, 303), or
**in that** the layer system (1) is a lining (155) of a combustion chamber (110).

16. Layer system according to claim 2, 14 to 18,
**characterized in that**
the layer system (1) is arranged on a newly produced component, in particular for a turbine blade or vane (120, 130, 354, 357, 366).

17. Layer system according to claim 2, 14 to 18,
**characterized in that**
the layer system (1) is present on a refurbished component, in particular for a turbine blade or vane (120, 130, 354, 357, 366)

## Revendications

1. Couche métallique de protection,
constituée (en % en poids % en p)
de 12,5 à 14,0 de chrome,
de 0,5 à 1,0 % de silicium,
de 0,1 à 0,5 % d'aluminium,
de 0,0 à 0,7 % en poids d'yttrium et/ou d'au moins un métal du groupe comprenant le scandium et les éléments des terres rares,
le reste étant du fer ainsi que des impuretés dues à la fabrication.

2. Système stratifié,
au moins constitué d'un substrat (4)
et d'une couche (7) métallique de protection suivant la revendication 1 sur le substrat (4).

3. Système stratifié suivant la revendication 2,
**caractérisé en ce que**
le substrat (4) est métallique ou céramique.

4. Système stratifié suivant la revendication 2 ou 3,
**caractérisé en ce que**
le substrat (4) est un alliage de base ferritique, un acier ou un superalliage à base de nickel ou à base de cobalt.

5. Système stratifié suivant l'une des revendications 2 à 4,
**caractérisé en ce que**
la couche (7) métallique de protection est ferritique.

6. Système stratifié suivant la revendication 2, 4 ou 5,
**caractérisé en ce que**
la couche (7) métallique de protection et le substrat (4) sont ferritiques.

7. Système stratifié suivant la revendication 2 ou 6,
**caractérisé en ce que**
la couche (7) de protection adhère au substrat (4) par adhérence.

8. Système stratifié suivant la revendication 2, 6 ou 7
**caractérisé en ce que**
le système (1) stratifié n'a pas subi de traitement de diffusion.

9. Système stratifié suivant la revendication 6, 7 ou 8
**caractérisé en ce que**
les coefficients α de dilatation thermique de la couche (7) de protection,
notamment de la couche (7) ferritique de protection,
et du substrat (4),
notamment du substrat (4) ferritique,
sont égaux, presque égaux ou ont une différence allant jusqu'à 10 %.

10. Système stratifié suivant l'une des revendication 2 à 9,
**caractérisé en ce que**
le substrat (4) est un alliage à base de fer, notamment un acier 1 % CrMOV, ou un acier à 10 à 12 % de chrome.

11. Système stratifié suivant l'une des revendications 2 à 9,
**caractérisé en ce que**
le substrat (4)
est un acier à 1 à 2 % de Cr,
notamment 30CrMoNiV5-11 ou 23CrMoNiWV8-8 ou G17CrMoV5-10 ou G17CrMo9-10 ou
un acier à 10 % de Cr,
notamment X12CrMoWVNbN10-1 -1 ou GX12CrMoWVNbN10-1-1 ou GX12CrMoVNbN9-1.

12. Système stratifié suivant la revendication 2,
**caractérise en ce que**
il y a une couche (10) en céramique sur la couche (7) métallique de protection.

13. Système stratifié suivant la revendication 12,
**caractérisé en ce que**
la couche (10) en céramique est une couche calorifuge, notamment à base d'oxyde de zirconium.

14. Système stratifié suivant la revendication 2 ou 13,
**caractérisé en ce que**
le système (1) stratifié est un système stratifié d'un élément (110, 120, 130) d'une turbine (100) à gaz ou un élément (333, 354, 357, 366) d'une turbine (300, 303) à vapeur.

15. Système stratifié suivant la revendication 2 ou 14,
**caractérisé en ce que**
le système (1) stratifié est une aube (120, 130, 354, 357, 366) de turbine ou
**en ce que** le système (1) stratifié est une partie de carter ou une zone d'un carter d'une turbine (100, 300, 303) ou
**en ce que** le système (1) stratifié est un garnissage (155) d'une chambre de combustion (110).

16. Système stratifié suivant l'une des revendication 2 et 14 à 18,
**caractérisé en ce que**
le système (1) stratifié est disposé sur un élément nouvellement fabriqué, notamment pour une aube (120, 130, 354, 357, 366) de turbine.

17. Système stratifié suivant l'une des revendication 2 ou 14 à 18,
**caractérisé en ce que**
le système (1) stratifié est présent sur un élément retravaillé, notamment pour une aube (120, 130, 354, 357, 366) de turbine.
